# EUROPEAN PATENT SPECIFICATION

(11) **EP 3 026 135 B1**
(45) Date of publication and mention of the grant of the patent: **13.03.2019**
(21) Application number: 15188727.0
(22) Date of filing: 07.10.2015
(51) Int. Cl.: C22C 21/04, B22F 3/105, B33Y 70/00, B22D 21/00

(54) **ALLOY CASTING MATERIAL AND METHOD FOR MANUFACTURING ALLOY OBJECT**
GUSSLEGIERUNGSMATERIAL UND VERFAHREN ZUR HERSTELLUNG EINES LEGIERUNGSOBJEKTS
MATÉRIAU DE MOULAGE D'ALLIAGE ET PROCÉDÉ DE FABRICATION D'UN OBJET EN ALLIAGE

(30) Priority: 21.11.2014 TW 103140383
(43) Date of publication of application: 01.06.2016
(73) Proprietor: Industrial Technology Research Institute, Chutung Hsinchu 31040 (TW)
(72) Inventor: Chou, Yu-Hsien, Tainan City 744 (TW); Yang, Chih-Chao, Tainan City 700 (TW); Hou, Yen-Yu, Tainan City 721 (TW); Weng, Chih-Jung, Tainan City 709 (TW); Chen, Chi-San, Kaohsiung City 813 (TW)
(74) Representative: V.O.

(56) References cited:
- WO-A1-2005/075692
- WO-A1-2013/179017
- DE-C1- 10 026 626
- US-A1- 2014 086 789
- PAN MA, KONDA G. PRASHANTH, SERGIO SCUDINO, YANDONG JIA, HONGWEI WANG, CHUNMING ZOU, ZUNJIE WEI, JÜRGEN ECKERT: "Influence of Annealing on Mechanical Properties of Al-20Si Processed by Selective Laser Melting", METALS, vol. 4, 27 January 2014 (2014-01-27), XP002756133, ISSN: 2075-4701
- OLAKANMI E O: "Selective laser sintering/melting (SLS/SLM) of pure Al, Al-Mg, and Al-Si powders: Effect of processing conditions and powder pr", JOURNAL OF MATERIALS PROCESSING TECHNOLOGY, ELSEVIER, NL, vol. 213, no. 8, 15 March 2013 (2013-03-15), pages 1387-1405, XP028547422, ISSN: 0924-0136, DOI: 10.1016/J.JMATPROTEC.2013.03.009
- ERHARD BRANDL ET AL: "Additive manufactured AlSi10Mg samples using Selective Laser Melting (SLM): Microstructure, high cycle fatigue, and fracture behavior", MATERIALS AND DESIGN, LONDON, GB, vol. 34, 29 July 2011 (2011-07-29), pages 159-169, XP028325185, ISSN: 0261-3069, DOI: 10.1016/J.MATDES.2011.07.067 [retrieved on 2011-08-03]
- PRASHANTH K G ET AL: "Microstructure and mechanical properties of Al-12Si produced by selective laser melting: Effect of heat treat", MATERIALS SCIENCE AND ENGINEERING A: STRUCTURAL MATERIALS: PROPERTIES, MICROSTRUCTURES AND PROCESSING, vol. 590, 22 October 2013 (2013-10-22), pages 153-160, XP028781638, ISSN: 0921-5093, DOI: 10.1016/J.MSEA.2013.10.023
- K. BARTOWIAK, S. ULLRICH, TH. FRICK, M. SCHMIDT: "New Developments of Laser Processing Aluminium Alloys via Additive Manufacturing Technique", PHYSICS PROCEDIA, vol. 12, 2011, XP002756134,
- K. KEMPEN, L. THIJS, J. VAN HUMBEECK, J.-P. KRUTH: "Mechanical properties of AlSi10Mg produced by Selective Laser Melting", PHYSICS PROCEDIA, vol. 39, 2012, XP002756135,
- SPIEKERMANN P: "Alloys - a special problem of patent law", NONPUBLISHED ENGLISH TRANSLATION OF DOCUMENT, 1990, pages 1-20, XP002184689,

## Description

### TECHNICAL FIELD

The technical field relates to an alloy casting material, and in particular it relates to a composition and a shaping method of the alloy casting material.

### BACKGROUND

In recent years, the cost of petroleum has risen very high, and the topics of alternative energy and environmental protection have gradually become important. Power units (e.g. turbo compressor, cylinder end, exhaust manifold, and the like) of vehicles such as cars or motorcycles made of light-weight aluminum alloy material have become a trend. The conventional power units of the aforementioned types of vehicles are usually manufactured with traditional casting method, thereby limiting the product appearance and the structural design due to the complicated post-CNC processing and heat treatment. The traditional casting method takes a long time, expends a huge amount of energy, and uses up an excessive amount of raw materials. Moreover, power units with complicated shapes are more difficult to process. The complicated processing steps and long processing period are equal to a high processing cost. Accordingly, the traditional casting method is not suitable for developing components with a complicated structure and multiple requirements in cars and motorcycles.

According to DE 100 26 626 C1 a cylinder head and engine block cast part consists of an aluminum alloy containing alloying additions of (in wt.%) 6.80-7.20 silicon, 0.20-0.45 iron, 0.30-0.40 copper, 0.25-0.30 manganese, 0.25-0.45 magnesium, 0.45-0.55 nickel, 0.10-0.15 zinc, 0.11-0.15 titanium and a maximum of 0.15 impurities. The alloy contains 1 vol.% of the phase types of aluminum-nickel, aluminum-copper, aluminum-manganese, aluminum-iron and mixed phases of these types. Further it discloses a process for the production of a cylinder head and engine block cast part comprising placing an aluminum alloy at 720-740 deg C into a casting mold; cooling at a speed of 0.1-10 K/s solution annealing at 530 deg C for 5 hours, quenching in water at 80 deg C and aging at 160-200 deg C for hours.

US 2014/086789 A1 discloses an aluminum alloy for a vehicle, that has the composition including, by weight %, 0.5% or less of Fe, 0.2% or less of Mn, Si, and Cu with the balance being Al and unavoidable impurities, wherein dendrite arm spacing is 45 [mu]m or less, and a size of an intermetallic compound is 150 [mu]m or less.

WO 2005/075692 A1 disclosure relates to the manufacture of metal articles, more specifically the manufacture of metal articles by additive manufacturing techniques, and in particular to the manufacture of metal articles by an additive manufacturing technique that may involve the selective melting or sintering of a metal powder. Examples of such techniques may include selective laser melting (SLM), selective laser sintering (SLS) and techniques that use an electron beam rather than a laser. Exemplary embodiments include a method of manufacture of an article comprising selective melting and/or sintering of a powder comprising an alloy containing aluminium, wherein the alloy contains bismuth.

Publications "Influence of Annealing on Mechanical Properties of Al-Si processed by selective Laser melting", Metals, Vol. 4, 27 January 2014 of Pan Ma et al." and "Selective laser sintering/melting (SLS/SLM) of pure Al, Al-Mg, and Al-Si powders: Effect of processing conditions and powder pr", JOURNAL OF MATERIALS PROCESSING TECHNOLOGY, ELSEVIER, NL, (20130315), vol. 213, no. 8, of OLAKANMI E O, are also dealing with alloy casting materials in the sense of the invention.

The same applies with "Additive manufactured AlSi10Mg samples using Selective Laser Melting (SLM): Microstructure, high cycle fatigue, and fracture behavior", MATERIALS AND DESIGN, LONDON, GB, vol. 34 of ERHARD BRANDL ET AL, and with "Microstructure and mechanical properties of Al-12Si produced by selective laser melting: Effect of heat treat", MATERIALS SCIENCE AND ENGINEERING A: STRUCTURAL MATERIALS: PROPERTIES, MICROSTRUCTURES AND PROCESSING, (20131022), vol. 590 of PRASHANTH K G ET AL.

Accordingly, a novel aluminum alloy material and related processing method is called for for overcoming the time-consuming and labor-intensive problems with the conventional method.

### SUMMARY

According the invention an alloy casting material consists of 97 to 99 parts by weight of Al and Si, which is consisting of 6 to 8 parts by weight of Si and 89 to 93 parts by weight of Al; 0.25 to 0.4 parts by weight of Cu; and 0.15 to 1.35 parts by weight of a combination of at least two of Mg, Ni, and Ti.

One embodiment of the disclosure provides a method of forming an alloy object, comprising: spraying the alloy casting material as claimed in claim 1 by gas to form powders; melting the powders by laser-additive manufacturing to form a melted object; and processing an ageing heat treatment for the melted object to complete the alloy object.

A detailed description is given in the following embodiments.

### DETAILED DESCRIPTION

In the following detailed description, for the purposes of explanation, numerous specific details are set forth in order to provide a thorough understanding of the disclosed embodiments. It will be apparent, however, that one or more embodiments may be practiced without these specific details.

In the following descriptions, a power unit of a vehicle is melted by laser-additive manufacturing. Conventional three-step processes (shaping, post-CNC processing, and heat treatment) can be simplified to a single additive melting process by the laser additive melting technology. The melted object is near a net-shape of the final product, which may reduce the amount that raw materials need and solve the processing problems of the structures being difficult to process (such as power units with an internal cooling channel design). The aluminum alloy powder should have thermal resistance and mechanical strength to meet the requirement for the power unit standard of cars, motorcycles, and other vehicles. In addition, the above aluminum alloy powder should be also melted by the laser-additive manufacturing. As such, the composition of the aluminum alloy powder should be fine-tuned to enhance the mechanical strength at high temperatures of the melted object made from the aluminum alloy powder. On the other hand, the aluminum alloy bulk can be sprayed by gas to form the aluminum alloy powders with high roundness.

According to the invention the alloy casting powder consists of 97 to 99 parts by weight of Al and Si, 0.25 to 0.4 parts by weight of Cu, and 0.15 to 1.35 parts by weight of a combination of at least two of Mg, Ni, and Ti. An overly high Cu ratio may reduce the casting flowability and corrosion resistance of the powder. An overly low Cu ratio may reduce the mechanical strength and processability of the aluminum alloy.

Also the alloy casting material includes 6 to 8 parts by weight of Si and 89 to 93 parts by weight of Al. An overly high Si ratio may degrade the alloy elongation. An overly low Si ratio may reduce the casting flowability and the casting material hardness.

In one embodiment, the alloy casting material includes 0.7 to 0.9 parts by weight of Mg. An overly high Mg ratio may degrade the alloy elongation. An overly low Mg ratio may reduce the strength and the abrasion resistance of the aluminum alloy. In one embodiment, the alloy casting material includes 0.1 to 0.25 parts by weight of Ni. An overly high Ni ratio may degrade the alloy elongation. An overly low Ni ratio cannot enhance the mechanical properties at high temperature of the aluminum alloy. In one embodiment, the alloy casting material includes 0.05 to 0.2 parts by weight of Ti. An overly high Ti ratio may form compound with other elements in the aluminum alloy, thereby negatively influencing the mechanical properties of the alloy material.

In one embodiment, the alloy casting material can be used to form an alloy object. For example, Al, Si, Cu, Ni, Mg, and Ti of above ratios can be melted to form an alloy bulk. The alloy bulk was sprayed by gas to form powders, and the powder is then melted by laser-additive manufacturing to form a melted object. In one embodiment, the powder has a diameter of 5µm to 35µm. An overly large powder will make the melted object have an overly high surface roughness, thereby lowering the precision of the melted object. An overly small powder is easily aggregated to lower the flowability of the powder, thereby negatively influencing the thickness uniformity of each powder layer during the laser-additive manufacturing. In one embodiment, the melting of the laser-additive manufacturing is performed at a temperature of 660°C to 2400°C. An overly high melting temperature of the laser-additive manufacturing will vaporize the aluminum alloy material. An overly low melting temperature of the laser-additive manufacturing cannot melt the aluminum alloy material. Thereafter, the melted object was processed by an ageing heat treatment to complete an alloy object. In one embodiment, the ageing heat treatment is performed at a temperature of 150°C to 180°C. An overly high ageing heat treatment temperature will result in fewer precipitated phases with a larger diameter and a lower density due to over ageing, which may lower the hardness of the alloy object. An overly low ageing heat treatment temperature cannot sufficiently precipitate phase, thereby insufficiently improving the hardness of the alloy object. The principles of the gas spraying, the melting by laser-additive manufacturing, and the ageing heat treatment are so-called 3D printing, in which the melted alloy powder is stacked to form a shape. The 3D printing may reduce the need for raw materials which are consumed in conventional lathe processing, or omit the need for a mold in conventional mold shaping.

Below, exemplary embodiments will be described in detail so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLES

### Example 1

Al, Si, Cu, Mg, Ni, and Ti were weighed as indicated in Table 1 and mixed, and then melted in a high temperature furnace to form aluminum alloys. The aluminum alloys were sequentially sprayed by gas to form powders, melted by laser-additive manufacturing, and processed by ageing heat treatment at 165°C for 6 hours. The standard hardness (HRB) of the laser melted object of the aluminum alloys before and after the ageing heat treatment were analyzed by a Rockwell hardness tester on the basis of ASTM E18 standard, as shown in Table 1. The laser melted aluminum alloys were hardened by ageing precipitating, wherein the laser melted object with 0.3 and 0.4 parts by weight of Cu had the greatest increase of hardness after the ageing heat treatment.

**Table 1**

| Sample No. | Al | Si | Cu | Ni | Mg | Ti | Hardness of the laser melted object before the ageing heat treatment (HRB) | Hardness of the laser melted object after the ageing heat treatment (HRB) |
|---|---|---|---|---|---|---|---|---|
| A1 | 91.95 | 7 | 0.2 | 0.15 | 0.7 | 0 | 23.6 | 51.2 |
| A2 | 91.65 | 7 | 0.3 | 0.15 | 0.8 | 0.1 | 32.3 | 71.5 |
| A3 | 91.35 | 7 | 0.4 | 0.15 | 0.9 | 0.2 | 35.4 | 73.1 |
| A4 | 91.6 | 7 | 0.2 | 0.2 | 0.8 | 0.2 | 18.3 | 40.9 |
| A5 | 91.6 | 7 | 0.3 | 0.2 | 0.9 | 0 | 37.7 | 75.6 |
| A6 | 91.6 | 7 | 0.4 | 0.2 | 0.7 | 0.1 | 34.1 | 73.6 |
| A7 | 91.55 | 7 | 0.2 | 0.25 | 0.9 | 0.1 | 25.6 | 57.8 |
| A8 | 91.55 | 7 | 0.3 | 0.25 | 0.7 | 0.2 | 29.7 | 70.7 |
| A9 | 91.55 | 7 | 0.4 | 0.25 | 0.8 | 0 | 35.9 | 74.3 |

The properties of samples A1-A9 were tested as indicated below: the ultimate tensile strength at room temperature of the samples was tested by Gleeble3500 on the basis of the ASTM E8 standard, the yield strength at room temperature of the samples was tested by Gleeble3500 on the basis of the ASTM E8 standard, the elongation rate at room temperature of the samples was tested by Gleeble3500 on the basis of the ASTM E8 standard, the ultimate tensile strength at high temperature of the samples was tested by Gleeble3500 on the basis of the ASTM E8 (E8M) and E21 standards, the yield strength at high temperature of the samples was tested by Gleeble3500 on the basis of the ASTM E8 (E8M) and E21 standards, and the elongation rate at high temperature of the samples was tested by Gleeble3500 on the basis of the ASTM E8 (E8M) and E21 standards, as shown in Table 2. After the ageing heat treatment, Sample A2 (Al_{91.65}Si₇Cu_{0.3}Mg_{0.8}Ni_{0.15}Ti_{0.1}) and Sample A8 (Al_{91.55}Si₇Cu_{0.3}Mg_{0.7}Ni_{0.25}Ti_{0.2}) simultaneously met the requirements for mechanical strength and elongation rate at room temperature and high temperature (250°C).

**Table 2**

| Sample No. | Ultimate tensile strength at room temperature | Yield strength at room temperature | Elongation rate at room temperature | Ultimate tensile strength at high temperature | Yield strength at high temperature | Elongation rate at high temperature |
|---|---|---|---|---|---|---|
| A1 | 267 MPa | 185 MPa | 5.1 % | 142 MPa | 130 MPa | 11.8 % |
| A2 | 355 MPa | 232 MPa | 3.9 % | 238 MPa | 194 MPa | 5.2 % |
| A3 | 338 MPa | 219 MPa | 2 % | 222 MPa | 185MPa | 4.3 % |
| A4 | 251 MPa | 172 MPa | 7.5 % | 125 MPa | 106 MPa | 13.7 % |
| A5 | 348 MPa | 224 MPa | 2.5 % | 234 MPa | 193 MPa | 4.8 % |
| A6 | 339 MPa | 218 MPa | 2.1 % | 227 MPa | 183 MPa | 3.5 % |
| A7 | 291 MPa | 186 MPa | 5.3 % | 162 MPa | 142 MPa | 7.5 % |
| A8 | 340 MPa | 206 MPa | 4 % | 227 MPa | 188 MPa | 5.1 % |
| A9 | 334 MPa | 201 MPa | 2.2 % | 218 MPa | 183 MPa | 4.8% |

### Example 2

Si, Mg, Ni, and Ti contents were fixed and A1 and Cu contents were changed as shown in Table 3. The above elements were mixed and melted to form aluminum alloys. The aluminum alloys were sequentially sprayed by inert gas to form powders, melted by laser-additive manufacturing, and processed by ageing heat treatment at 165°C for 6 hours. The standard hardness (HRB) of the laser melted object of the aluminum alloys before and after the ageing heat treatment are shown in Table 4. The ultimate tensile strength at room temperature, the yield strength at room temperature, the elongation rate at room temperature, the ultimate tensile strength at high temperature, the yield strength at high temperature, and the elongation rate at high temperature of the samples B1-B4 are shown in Table 5. The above properties of Samples B1-B4 were tested on the basis as described above. Sample B3 (Al_{91.5}Si₇Cu_{0.3}Mg_{0.8}Ni_{0.2}Ti_{0.2}) after the ageing heat treatment simultaneously had a hardness (HRB) of 74.5 and simultaneously met the requirement of the mechanical strength and elongation rate at room temperature and high temperature (250°C).

**Table 3**

| Sample No. | Al | Si | Cu | Ni | Mg | Ti | Hardness of the laser melted object before the ageing heat treatment (HRB) | Hardness of the laser melted object after the ageing heat treatment (HRB) |
|---|---|---|---|---|---|---|---|---|
| B1 | 91.6 | 7 | 0.2 | 0.2 | 0.8 | 0.2 | 18.3 | 40.9 |
| B2 | 91.55 | 7 | 0.25 | 0.2 | 0.8 | 0.2 | 33.3 | 67.2 |
| B3 | 91.5 | 7 | 0.3 | 0.2 | 0.8 | 0.2 | 38.4 | 74.5 |
| B4 | 91.45 | 7 | 0.35 | 0.2 | 0.8 | 0.2 | 37.3 | 74.9 |

**Table 4**

| Sample No. | Ultimate tensile strength at room temperature | Yield strength at room temperature | Elongation rate at room temperature | Ultimate tensile strength at high temperature | Yield strength at high temperature | Elongation rate at high temperature |
|---|---|---|---|---|---|---|
| B1 | 251 MPa | 172 MPa | 7.5 % | 125 MPa | 106 MPa | 13.7 % |
| B2 | 312 MPa | 211 MPa | 4.3 % | 198 MPa | 164 MPa | 6.2 % |
| B3 | 357 MPa | 235 MPa | 3.8 % | 242 MPa | 199 MPa | 4.9 % |
| B4 | 354 MPa | 241 MPa | 2.6 % | 225 MPa | 189 MPa | 3.9 % |

### Comparative Example 1

Commercially available aluminum alloy AlSi10Mg (A360, commercially available from Jen-Yu Cooperation, Taiwan) and AlSi₉Fe_{1.2}Cu₄Mn_{0.5}Mg_{1.0}Ni₀.₅Zn_{1.0}Ti_{0.25} (AC4B, commercially available from Jen-Yu Cooperation, Taiwan) were selected to be sprayed by gas to form powders, melted by laser-additive manufacturing, and processed by ageing heat treatment at 165°C for 6 hours, too. The mechanical strengths at room temperature and high temperature of the products were tested and compared, as shown in Table 5. The alloy objects made from the aluminum alloy powder of the disclosure had a higher ultimate tensile strength (UTS) and yield strength (YS) at high temperature (250°C) than that of the alloy objects made from the commercially available aluminum alloy materials. In other words, the alloy objects made from the aluminum alloy powder of the disclosure is more suitable to be applied in power units of the car or motorcycle industry.

**Table 5**

| Compositions | AlSi10Mg | AC4B | A1-A9 and B1-B4 samples |
|---|---|---|---|
| Strength at room | YS: 220MPa | YS: 220MPa | YS>220MPa |
| temperature | UTS:325MPa | UTS:320MPa | UTS>350MPa |
| Strength at high | YS: 50MPa | YS: 75MPa | YS >180MPa |
| temperature (250°C) | UTS:85MPa | UTS:110MPa | UTS>220MPa |

### Comparative Example 2

Aluminum alloy materials with element ranges out of that in the disclosure (see Table 6) were selected, and then sprayed by gas to form powders, melted by laser-additive manufacturing, and processed by ageing heat treatment at 165°C for 6 hours, too. The mechanical strengths at room temperature and high temperature of the products were tested and compared, as shown in Table 7. The alloy objects made from the aluminum alloy powder of the disclosure had a higher ultimate tensile strength (UTS) and yield strength (YS) at high temperature (250°C) than that of the alloy objects made from the four aluminum alloy materials in Table 6. In other words, the alloy objects made from the aluminum alloy powder of the disclosure is more suitable to be applied in power units of the car or motorcycle industry.

**Table 6**

| Sample No. | Al | Si | Cu | Ni | Mg | Ti |
|---|---|---|---|---|---|---|
| C1 | 89.8 | 6 | 3.5 | 0.35 | 0.1 | 0.25 |
| C2 | 87.15 | 8.5 | 3 | 0.5 | 0.6 | 0.25 |
| C3 | 84.25 | 11 | 1 | 2.5 | 1 | 0.25 |
| C4 | 92.05 | 5 | 1.2 | 1 | 0.5 | 0.25 |

**Table 7**

| Sample No. | Ultimate tensile strength at room temperature | Yield strength at room temperature | Elongation rate at room temperature | Ultimate tensile strength at high temperature | Yield strength at high temperature | Elongation rate at high temperature |
|---|---|---|---|---|---|---|
| C1 | 250MPa | 165 MPa | 2 % | 110MPa | 65MPa | 8% |
| C2 | 248 MPa | 193 MPa | 1 % | 130 MPa | 83MPa | 6 % |
| C3 | 250 MPa | 195 MPa | 0.5 % | 125 MPa | 70MPa | 5 % |
| C4 | 240 MPa | 170MPa | 3% | 65 MPa | 35MPa | 16 % |

## Claims

1. An alloy casting material, consisting of:
97 to 99 parts by weight of Al and Si, which is consisting of 6 to 8 parts by weight of Si and 89 to 93 parts by weight of Al;
0.25 to 0.4 parts by weight of Cu; and
0.15 to 1.35 parts by weight of a combination of at least two of Mg, Ni, and Ti.

2. The alloy casting material as claimed in claim 1, including 0.7 to 0.9 parts by weight of Mg.

3. The alloy casting material as claimed in claim 1, including 0.1 to 0.25 parts by weight of Ni.

4. The alloy casting material as claimed in claim 1, including 0.05 to 0.2 parts by weight of Ti.

5. A method of forming an alloy object, comprising:
spraying the alloy casting material as claimed in claim 1 by inert gas to form powders;
melting the powders by laser additive-manufacturing to form a melted object; and
processing an ageing heat treatment for the melted object to complete the alloy object.

6. The method as claimed in claim 5, wherein the powders of the alloy casting material have a diameter of 5µm to 35µm.

7. The method as claimed in claim 5, wherein the step of melting the powders by laser-additive manufacturing is performed at a temperature of 660°C to 2400°C.

8. The method as claimed in claim 5, wherein the ageing heat treatment is performed at a temperature of 150°C to 180°C.

## Patentansprüche

1. Gusslegierungsmaterial, bestehend aus:
97 bis 99 Gewichtsanteilen Al und Si, die aus 6 bis 8 Gewichtsanteilen Si und 89 bis 93 Gewichtsanteilen Al bestehen;
0,25 bis 0,4 Gewichtsanteilen Cu und
0,15 bis 1,35 Gewichtsanteilen einer Kombination aus wenigstens zwei von Mg, Ni und Ti.

2. Gusslegierungsmaterial nach Anspruch 1, 0,7 bis 0,9 Gewichtsanteile Mg enthaltend.

3. Gusslegierungsmaterial nach Anspruch 1, 0,1 bis 0,25 Gewichtsanteile Ni enthaltend.

4. Gusslegierungsmaterial nach Anspruch 1, 0,05 bis 0,2 Gewichtsanteile Ti enthaltend.

5. Verfahren zum Bilden eines Legierungsgegenstandes, umfassend:
Sprühen des Gusslegierungsmaterials nach Anspruch 1 mittels Inertgas, um Pulver zu bilden;
Schmelzen der Pulver mittels laseradditiver Fertigung, um einen geschmolzenen Gegenstand zu bilden; und
Ausführen einer Wärmehärtungsbehandlung für den geschmolzenen Gegenstand, um den Legierungsgegenstand fertigzustellen.

6. Verfahren nach Anspruch 5, wobei die Pulver des Gusslegierungsmaterials einen Durchmesser von 5 µm bis 35 µm aufweisen.

7. Verfahren nach Anspruch 5, wobei der Schritt des Schmelzens der Pulver mittels laseradditiver Fertigung bei einer Temperatur von 660 °C bis 2400 °C durchgeführt wird.

8. Verfahren nach Anspruch 5, wobei die Wärmehärtungsbehandlung bei einer Temperatur von 150 °C bis 180 °C durchgeführt wird.

## Revendications

1. Matériau de pièce coulée en alliage constitué de :
97 à 99 parties en poids d'Al et de Si, qui sont constituées de 6 à 8 parties en poids de Si et 89 à 93 parties en poids d'Al ;
0,25 à 0,4 partie en poids de Cu ; et
0,15 à 1,35 parties en poids d'une combinaison d'au moins deux parmi Mg, Ni et Ti.

2. Matériau de pièce coulée en alliage selon la revendication 1, contenant 0,7 à 0,9 partie en poids de Mg.

3. Matériau de pièce coulée en alliage selon la revendication 1, contenant 0,1 à 0,25 partie en poids de Ni.

4. Matériau de pièce coulée en alliage selon la revendication 1, contenant 0,05 à 0,2 partie en poids de Ti.

5. Procédé de formation d'un objet en alliage, comprenant :
la pulvérisation du matériau de pièce coulée en alliage selon la revendication 1 avec un gaz inerte pour former des poudres ;
la fusion des poudres par fabrication additive au laser pour former un objet fondu ; et
la réalisation d'un traitement de vieillissement à la chaleur sur l'objet fondu pour achever l'objet en alliage.

6. Procédé selon la revendication 5, dans lequel les poudres du matériau de pièce coulée en alliage ont un diamètre de 5 µm à 35 µm.

7. Procédé selon la revendication 5, dans lequel l'étape de fusion des poudres par fabrication additive au laser est effectuée à une température de 660 °C à 2400 °C.

8. Procédé selon la revendication 5, dans lequel le traitement de vieillissement à la chaleur est effectué à une température de 150 °C à 180 °C.
